Europäisches Patentamt

European Patent Office

Office européen des brevets

(19)

(11) Veröffentlichungsnummer: **0 306 888**
**B1**

(12) **EUROPÄISCHE PATENTSCHRIFT**

(45) Veröffentlichungstag der Patentschrift: **09.01.91**

(51) Int. Cl.⁵: **B 62 D 17/00**

(21) Anmeldenummer: **88114492.7**

(22) Anmeldetag: **06.09.88**

(54) **Lenkbare Vorderachse für Kraftfahrzeuge.**

(30) Priorität: **09.09.87 DE 3730244**

(43) Veröffentlichungstag der Anmeldung:
**15.03.89 Patentblatt 89/11**

(45) Bekanntmachung des Hinweises auf die
Patenterteilung:
**09.01.91 Patentblatt 91/02**

(84) Benannte Vertragsstaaten:
**DE ES FR GB IT**

(56) Entgegenhaltungen:
**DE-A-3 139 792**
**GB-A-2 094 245**
**US-A-3 888 328**

(73) Patentinhaber: **Adam Opel Aktiengesellschaft
Bahnhofsplatz 1 Postfach 17 10
D-6090 Rüsselsheim (DE)**

(72) Erfinder: **Bausch, Paul, Dipl.-Ing. (FH)
Auf der Irrlitz 30
D-6229 Hattenheim (DE)**

(74) Vertreter: **Bergerin, Ralf, Dipl.-Ing. et al
Adam Opel Aktiengesellschaft Bahnhofplatz 1
Postfach 17 10
D-6090 Rüsselsheim (DE)**

Courier Press, Leamington Spa, England.

**Beschreibung**

Die Erfindung betrifft eine lenkbare Vorderachse für Kraftfahrzeuge mit je einem Achsschenkel für jedes der beiden Vorderräder der drehbar an zumindest einem über ein Lenkerlager am Chassis schwenkbar abgestützten Achslenker gelagert ist, wobei die Drehachsen der Lenkerlager im wesentlichen in Längsrichtung des Kraftfahrzeugs angeordnet sind und mit je einer jedem der Vorderräder zugeordneten Spurstange, die an einem mit dem jeweiligen Achsschenkel verbundenen Spurstangenhebel angelenkt ist, wobei zwischen den beiden Spurstangen eine mit diesen verbundene Lenkvorrichtung angeordnet ist.

Derartige Vorderradachsen werden sowohl bei frontals auch bei heckangetriebenen Kraftfahrzeugen für die Aufhängung der lenkbaren Vorderräder verwendet. Dabei wird mit Hilfe der über Spurstangenhebel mit den Achsschenkeln verbundenen Spurstangen eine Vorspur eingestellt, um die Flatterneigung der Vorderräder zu vermindern.

Wird nun ein derartiges Fahrzeug beim Befahren einer Fahr bahn mit unterschiedlichen Reibungskoeffizienten µ gebremst, wobei z.B. die rechten Fahrzeugräder auf Eis und die linken Fahrzeugräder auf Beton laufen (sogenannter µ-Split), so wird das Kraftfahrzeug auf der linken Seite stärker gebremst als auf der rechten und es entsteht eine Gierbeschleunigung, die zu einem gefährlichen Ausbrechen des Kraftfahrzeugs führen kann.

Die der Erfindung zugrundeliegende Aufgabe ist es nun, eine lenkbare Vorderachse der eingangs genannten Art zu schaffen, die die Geradeausstabilität beim Bremsen auf µ-Split, also beim Bremsen auf einer Fahrbahn die in Längsrichtung nebeneinander unterschiedliche Reibungskoeffizienten aufweist, sicherzustellen.

Diese Aufgabe wird erfindungsgemäß dadurch gelöst, daß die Spurstangen zur hydraulischen Längenverstellung einen Ausdehnungsraum aufweisen, dem eine Hydraulikflüssigkeit zuführbar ist, und daß beide je einem Vorderrad zugeordneten Lenkerlager zwischen den Anschlußstellen für den Achslenker und das Chassis einen in Fahrzeuglängsrichtung zusammendrückbaren hohlen Verdrängungsbereich aufweisen, in dem die Hydraulikflüssigkeit untergebracht ist, die im Falle der bei einer Bremsung auftretenden Zusammendrükkung des Verdrängungsbereiches über eine Hydraulikleitung den Ausdehnungsraum der Spurstange des zugeordneten Vorderrades beaufschlagt.

Durch die erfindungsgemäß vorgesehenen, hydraulisch längenverstellbaren Spurstangen und die mit diesen verbundenen Verdrängungsbereiche der Lenkerlager wird erreicht, daß beim Bremsen eines Kraftfahrzeugs die zwischen den Achslenkern und dem Chassis auftretenden Bremskräfte in Fahrzeuglängsrichtung ein Zusammendrücken der Verdrängungsbereiche bewirken, so daß Hydraulikflüssigkeit aus ihnen in die Ausdehnungsräume der Spurstangen gelangt, so daß diese eine Längenveränderung zur Vergrößerung der Vorspur durchführen. Beim Bremsen auf µ-Split wird dabei z.B. das linke Vorderrad stärker gebremst als das rechte, so daß auch die dem linken Vorderrad zugeordneten Lenkerlager stärker zusammengedrückt werden als die dem rechten Vorderrad zugeordneten Lenkerlager. Somit wird aus den linken Lenkerlagern mehr Hydraulikflüssigkeit in den Ausdehnungsraum der linken Spurstange gedrückt, was zur Folge hat, daß die linke Spurstange eine größere Längenänderung durchführt als die rechte Spurstange. Somit wird also auch das linke Vorderrad stärker in die Vorspur eingelenkt als das rechte Vorderrad, wodurch eine der Gierbeschleunigung entgegengerichtete Lenkkraft erzeugt wird, so daß das Fahrzeug weiterhin geradeaus fährt.

Es wird also eine automatische Kompensation der auf das Fahrzeug wirkenden Gierbeschleunigungen erreicht, so daß der Fahrer des Fahrzeugs der Gierbeschleunigung nicht bewußt gegenzulenken braucht. Hierdurch wird die Fahrsicherheit des Kraftfahrzeugs wesentlich erhöht.

Ein weiterer wesentlicher Vorteil der Erfindung besteht darin, daß das unterschiedliche Einlenken der Vorderräder in die Vorspur aufgehoben wird, sobald der µ-Split der Fahrbahn nicht mehr vorliegt, so daß das Fahrzeug weiterhin in Geradeausrichtung gehalten wird.

Weiter ist es von Vorteil, daß unabhängig vom Fahrbahnzustand auch bei z.B. infolge von Verschleiß ungleichmäßig wirkenden Vorderradbremsen ein dadurch bedingtes Ausbrechen des Kraftfahrzeugs verhindert wird, da auch dann das stärker gebremste Rad weiter in die Vorspur eingelenkt wird als das weniger gebremste Vorderrad.

Bei einer erfindungsgemäßen lenkbaren Vorderachse, bei der jeder Achsschenkel mit einem vorderen und einem hinteren Achslenkerarm mittels je eines Lenkerlagers schwenkbar am Chassis abgestützt ist, ist vorgesehen, daß jedes Lenkerlager einen hohlen Verdrängungsbereich aufweist. Hierdurch wird bei einer Vorderachse mit wirkungsmäßig in Reihe geschalteten Lenkerlagern bewirkt, daß insgesamt ein vergrößertes Hydraulikflüssigkeitsvolumen für die Längenveränderung der zugeordneten Spurstange zur Verfügung steht.

Bei einer vorteilhaften Weiterbildung der Erfindung ist vorgesehen, daß die Verdrängungsbereiche der linken bzw. rechten Lenkerlager mit dem Ausdehnungsraum der linken bzw. rechten Spurstange ein geschlossenes hydraulisches System bilden. Hierdurch werden die Wartungsarbeiten an der erfindungsgemäßen Vorderachse im wesentlichen auf die üblichen Wartungsarbeiten beschränkt, da infolge der geschlossenen Hydrauliksysteme praktisch kein Hydraulikverlust auftreten kann, so daß diese praktisch wartungsfrei sind.

Eine einfache bauliche Ausführung der Erfindung kennzeichnet sich dadurch, daß der Verdrängungsbereich einen hydraulischen Kolben und einen hydraulischen Zylinder aufweist, die federnd voneinander weg vorgespannt sind.

Um die für die Rückstellung der Kolben-Zylinderanordnung des Lenkerlagers erforderliche Federkraft auf einfache Weise zu erzeugen, sieht eine bevorzugte praktische Ausführungsform vor, daß jeder Achslenker bzw. jeder Achslenkerarm auf einer elastischen Buchse gelagert ist, die auf der Chassisbefestigungsseite einen in den Zylinder einvulkanisierten Balg aufweist, der die durch die Buchse begrenzte Hydraulikflüssigkeit umschließt, und daßder Zylinder auf der vom Balg abgewandten Seite mit einer am Chassis befestigten Abschlußplatte verbunden ist, die die Hydraulikflüssigkeit auf der der Buchse gegenüberliegenden Seite begrenzt und eine Anschlußbohrung für die zur zugeordneten Spurstange führende Hydraulikleitung aufweist, wobei zweckmäßigerweise auf der gegenüberliegenden Seite das Lenkerlager mit einem einvulkanisierten Haltebolzen am Chassis befestigt ist.

Aufgrund der hierdurch erreichten guten Rückstellung der Lenkerlager bei Verschwinden der darauf wirkenden Bremskräfte nach einem Bremsvorgang steht das gesamte Volumen der Zylinder-Kolbenanordnung des bzw. der Lenkerlager praktisch unmittelbar nach Beendigung des Bremsvorgangs wieder für die Aufnahme der Hydraulikflüssigkeit zur Verfügung, so daß sich die Spurverstellung durch die Spurstangen besonders schnell beseitigen läßt, so daß die für eine normale Geradeausfahrt ohne Bremsung erforderliche Vorspur wieder eingestellt ist.

Bei einer konstruktiv besonders einfach gestalteten Ausführungsform der Erfindung ist vorgesehen, daß jede Spurstange einen hydraulischen Zylinder aufweist, in dem ein den Ausdehnungsraum begrenzender hydraulischer Kolben angeordnet ist der federnd gegen den hydraulischen Zylinder vorgespannt ist wobei einstückig mit dem hydraulischen Zylinder der Spurstange ein erster Spurstangenabschnitt mit daran an gebrachter Befestigungsvorrichtung ausgebildet ist und daß eine aus dem hydraulischen Zylinder herausragende Kolbenstange des hydraulischen Kolbens einen zweiten Spurstangenabschnitt bildet, an dessen vom Kolben abgewandten Ende ein Verbindungszapfen zur Anlenkung der Spurstange am Spurstangenhebel angeordnet ist.

Um die einwandfreie Einstellung der Vorspur während des normalen Fahrbetriebes ohne Bremsung zu gewährleisten, ist bei einembevorzugten Ausführungsbeispiel derErfindung vorgesehen, daß der hydraulische Kolben der Spurstange von einer Schraubendruckfeder gegen den Boden des hydraulischen Zylinders vorgespannt ist, an dem der hydraulische Kolben in seiner Endstellung anliegt. Hierdurch wird für den Fall, daß die Lenkerlager nicht von Bremskräften beaufschlagt werden, gewährleistet, daß die Spurstangen stets eine genau de finierte Länge aufweisen, so daß die für den normalen Fahrbetrieb eingestellte Vorspur genau eingehalten werden kann.

Ein weiteres bevorzugtes Ausführungsbeispiel der Erfindung zeichnet sich dadurch aus, daß die mit ihrem einen Ende an der vom Ausdehnungsraum abgewandten Seite des hydraulischen Kolbens abgestützte Schraubendruckfeder mit ihrem anderen Ende an einer in den hydraulischen Zylinder eingesetzten Führungsbuchse für die Kolbenstange des hydraulischen Kolbens abgestützt ist. Hierdurch wird die Spurstange besonders stabil ausgebildet, da die beiden Spurstangenabschnitte im Kolben-Zylinder-Bereich an zwei relativ weit voneinander entfernten Punkten gegeneinander geführt werden können.

Im folgenden wird die Erfindung beispielsweise anhand der Zeichnung näher beschrieben. In der Zeichnung zeigt:

Fig. 1 eine Draufsicht auf eine lenkbare Vorderachse,

Fig. 2 einen Längsschnitt durch ein Lenkerlager der Vorderachse nach Fig. 1 und

Fig. 3 einen Längsschnitt durch eine Spurstange der Vorderachse nach Fig. 1.

In den verschiedenen Figuren der Zeichnung sind einander entsprechende Bauteile mit gleichen Bezugszeichen bezeichnet.

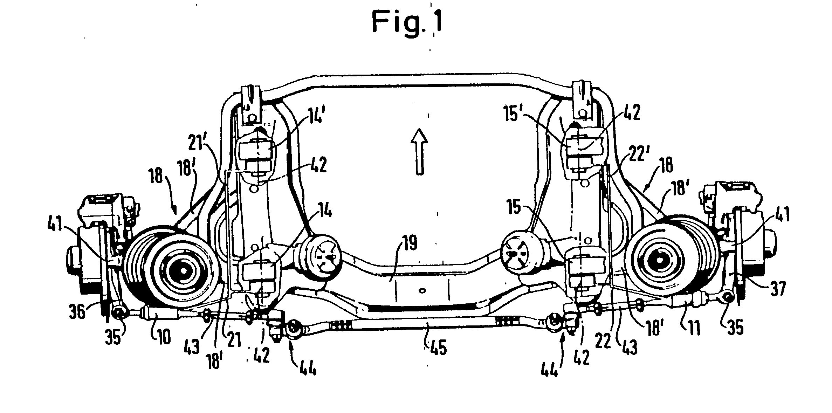

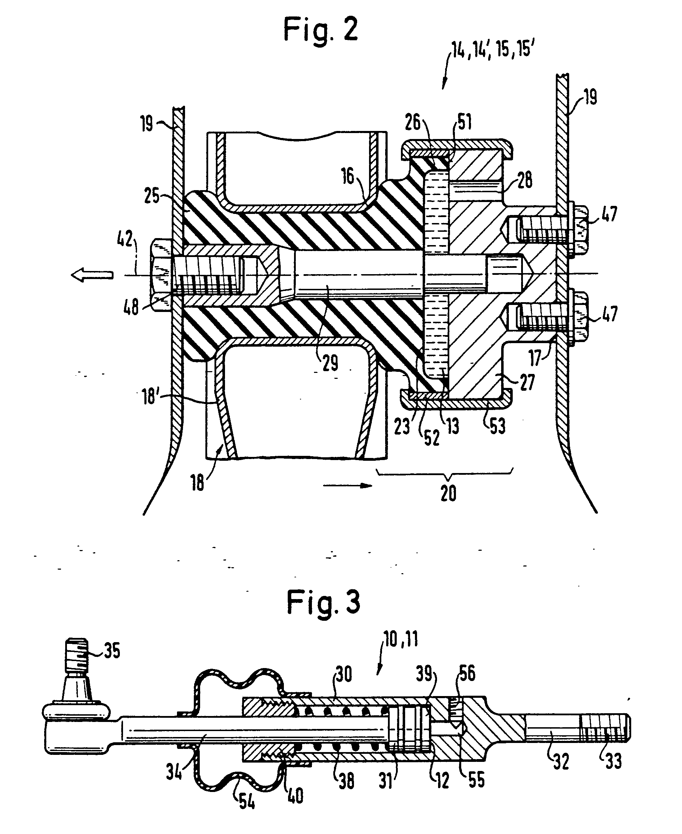

Nach Fig. 1 sind die Achsschenkel 41 in üblicher, nicht näher dargestellter Weise lenkbar an im wesentlichen horizontal angeordneten Achslenkern 18 aufgehängt, wobei jedem Achsschenkel 41 ein Achslenker 18 mit Achslenkerarmen 18' zu geordnet ist. Die Achslenkerarme 18' sind über Lenkerlager 14, 14', 15, 15' am Chassis 19 oder Vorderachsträger aufgehängt. Dabei sind die Drehachsen 42 der Lenkerlager in Längsrichtung des Fahrzeugs ausgerichtet. Die Pfeile in den Fig. 1 und 2 zeigen die Fahrtrichtung bzw. die Längsrichtung des Kraftfahrzeugs an.

An jedem Achsschenkel 41 ist ein Spurstangenhebel 36 bzw. 37 befestigt, der sich jeweils im wesentlichen in Fahrzeuglängsrichtung nach hinten erstreckt. Am hinteren Ende jedes Spurstangenhebels 36, 37 ist über einen Verbindungszapfen 35 eine quer zur Fahrzeuglängsrichtung angeordnete Spurstange 10 bzw. 11 mit ihrem einen Ende angelenkt, während das andere Ende jeder Spurstange 10, 11 über eine Zwischenstange 43 und eine Gelenkanordnung 44, die eine Schwenkbewegung der Spurstange um eine Längsachse und eine Hochachse zuläßt, mit einer Lenkvorrichtung 45 verbunden ist.

Zwischen den Lenkerlagern 14, 14' des Achslenkers 18 für das linke Vorderrad und der entsprechenden Spurstange 10 sind Hydraulikleitunge 21, 21' vorgesehen, die die Verdrängungsbereiche 20 der Lenkerlager 14, 14' mit dem Ausdehnungsraum 12 der Spurstange 10 verbinden, so daß ein geschlossenes hydraulisches System gebildet ist. In gleicher Weise sind die Verdrängungsbereiche 20 der dem rechten Vorderrad zugeordneten Lenkerlager 15, 15' an dem Ausdehnungsraum 12 der Spurstange 11 über Hydraulikleitungen 22, 22' angeschlossen.

Nach Fig. 2 ist jedes Lenkerlager 14, 14',15, 15' über eine Abschlußplatte 27 am Chassis 19 auf geeignete Weise, z.B. mittels Schrauben und Haltebolzen 47, 48, 29 befestigt. Die Abschlußplatte 27 weist einen kreiszylindrischen Außenumfang auf und besitzt eine Anschlußbohrung 28, für eine der hydraulischen Leitungen 21, 21', 22, 22', die zu einem mit Hydraulikflüssigkeit 13 gefüllten Raum führt, der durch einen elastischen Balg 26 von im wesentlichen kreiszylindrischer Form und die eine Stirnfläche 51 einer elastische Buches 25 begrenzt wird. Der Balg 26 ist an seinem Außenumfang an einen hülsenartigen und kreisförmigen Zylinder 52 anvulkanisiert, dessen Außenumfang mit dem Außenumfang der Abschlußplatte 27 fluchtend ausgerichtet ist. Um den Balg 26 und damit die elastische Buchse 25 an der Abschlußplatte 27 zu befestigen, sind die Abschlußplatte 27 und der Zylinder 52 fest in eine Haltehülse 53 eingesetzt, die an ihren axialen Enden umgebördelt ist.

Der Balg 26 besteht mit der Buchse 25 aus einem Stück. Die Buchse 25 und der Balg 26 sind im allgemeinen aus Gummi hergestellt.

Die Gummibuchse 25 wird von jeweils einem der Achslenkerarme 18' eines Achslenkers 18 umschlossen. In die Gummibuchse 25 ist axial der Haltebolzen 29 einvulkanisiert, der sich praktisch in Längsrichtung des Fahrzeugs erstreckt. Der Haltebolzen 29 steckt an dem der Abschlußplatte 27 zugewandten Ende axial leicht verschiebbar in einer dazu komplementären Bohrung der Abschlußplatte 27. Die Verbindung zwischen dem Haltebolzen 29 und der Abschlußplatte 27 ist also teleskopartig ausgebildet. Dadurch ist gewährleistet, daß das Lenkerlager 14, 14', 15, 15' im Rahmen des Chassis 19 oder am Vorderachsträger beidseitig spielfrei mit Schraubbolzen 47, 48 angeschraubt werden kann.

Auf diese Weise wird zwischen der Anschlußstelle 16 des Achslenkers 18 an das Lenkerlager 14, 14', 15, 15' und der Anschlußstelle 17 des Lenkerlagers 14, 14', 15, 15' an das Chassis 19 ein Verdrängungsbereich 20 für die Hydraulikflüssigkeit 13 geschaffen. Wenn nämlich beim Abbremsen des Kraftfahrzeugs aus der Fahrt in Richtung des Pfeiles das Chassis 19 verzögert wird, so kommt es zu einer Zusammendrückung des elastischen Balges 26, so daß der an die Hydraulikflüssigkeit 13 angrenzende Teil der elastischen Buchse 25 als hydraulischer Kolben 23 wirkt. Auf diese Weise wird ein Teil der Hydraulikflüssigkeit 13 durch die Anschlußbohrung 28 in eine Hydraulikleitung 21, 21', 22, 22' ausgestoßen, die somit einen Ausdehnungsraum 12 in einer der Spurstangen 10, 11 beaufschlagt.

Nach der Bremsung dehnt sich die Buchse 25 und insbesondere der Balg 26 wieder aus, so daß das ursprüngliche aus Fig. 2 ersichtliche Volumen für die Aufnahme der Hydraulikflüssigkeit 13 wieder zur Verfügung steht und durch die Anschlußbohrung 28 hydraulische Flüssigkeit wieder in den Verdrängungsbereich 20 zurückströmen kann.

Nach Fig. 3 besitzt jede Spurstange 10, 11 einen hydraulischen Zylinder 30 in dessen Zylinderbohrung ein hydraulischer Kolben 31 eingesetzt ist, dessen Kolbenstange 34 sich durch eine Führungsbuchse 40 hindurch aus dem Zylinder 30 herauserstreckt und die an ihrem vom Zylinder 31 abgewandten Ende den Verbindungszapfen 35 für die Anlenkung der Spurstange 10, 11 am Spurstangenhebel 36 bzw. 37 trägt. Die Führungsbuchse 40 ist dabei in die Zylinderbohrung des Zylinders 30 der Spurstange 10, 11 eingeschraubt. Um den Durchgangsbereich der Kolbenstange 34 durch die Führungsbuchse 40 vor Verunreinigung zu schützen, ist ein Faltenbalg 54 vorgesehen, der mit seinem einen Ende dicht an der Kolbenstange 34 und mit seinem anderen Ende dicht auf der Außenumfangsfläche des Zylinders 30 angebracht ist.

An der in der Zylinderbohrung liegenden Stirnfläche der Führungsbuchse 40 stützt sich eine Schraubendruckfeder 38 ab, die den hydraulischen Kolben 31 in seine Endstellung drückt, in der er am Boden 39 des Zylinders 30 anliegt. Im Boden 39 des Zylinders 30 ist eine axiale Verbindungsbohrung 55 vorgesehen, in die eine radiale Anschlußbohrung 56 für die Hydraulikleitungen 21, 21' bzw. 22, 22' mündet.

Einstückig mit dem Zylinder 30 der Spurstangen 10, 11 ist ein Spurstangenabschnitt 32 ausgebildet, an dessen vom Zylinder 30 abgewandten Ende eine Befestigungsvorrichtung 33, insbesondere ein Schraubgewinde, vorgesehen ist, mit dem die Spurstange 10, 11 an einer zur Lenkvorrichtung 45 führenden Zwischenstange 43 befestigt werden kann.

Die Arbeitsweise der beschriebenen lenkbaren Vorderradachse ist wie folgt:

Wird ein in Richtung des Pfeils in Fig. 1 fahrendes Fahrzeug gebremst, so wird wie bereits beschrieben, Hydraulikflüssigkeit aus den Verdrängungsbereichen 20 der Lenkerlager 14, 14', 15, 15' in die Hydraulikleitungen 21, 21' bzw. 22, 22' gedrückt und gelangt von dort über die Anschlußbohrungen 56 und die Verbindungsbohrungen 55 in die zwischen den Böden 39 und den hydraulischen Kolben 31 vorgesehenen Ausdehnungsräume der Spurstangen 10 bzw. 11. Dadurch werden die Kolben 31 der Spurstangen 10, 11 gegen die Kraft der Schraubendruckfedern 38 von den Böden 39 der Zylinder 30 weggedrückt, so daß der Abstand der Anschlußzapfen 35 von den entsprechenden Befestigungsvorrichtungen 33 vergrößert wird, also die Länge der Spurstangen 10, 11 vergrößert wird. Hierdurch werden die mit den Achsschenkeln 41 verbundenen Vorderräder jeweils nach innen gelenkt, so daß eine Vergrößerung der Vorspur entsteht.

Wird das Fahrzeug auf einer Fahrbahn mit gleichmäßigem Reibungskoeffizienten abgebremst, wobei eine gleichmäßige Wirkung der Bremsen vorausgesetzt wird, so sind die auf die Lenkerlager 14, 14' des linken Vorderrades wirkenden Kräfte gleich den Kräften, die auf die Lenkerlager 15, 15' des rechten Vorderrades einwirken. Somit ist auch die Vorspurverstellung für beide Räder gleich.

Laufen jedoch bei einer Bremsung die rechten Räder des Fahrzeugs auf einem Untergrund, der einen anderen Reibungskoeffizienten aufweist, als der Untergrund, auf dem die linken Fahrzeugräder laufen, so wirken unterschiedliche Kräfte auf die Lenkerlager 14, 14' bzw. 15, 15' des linken bzw. des rechten Vorderrades.

Wird dabei beispielsweise angenommen, daß die rechten Räder des Fahrzeugs auf einer vereisten Fahrbahn die linken jedoch auf einer trockenen Fahrbahn laufen, so wird das Fahrzeug auf der linken Seite stärker abgebremst, wodurch eine Gierbeschleunigung erzeugt wird, die versucht, das Fahrzeug nach links zu drehen. Da nun aber infolge der stärkeren Bremsung der linken Räder des Fahrzeugs auch die auf die dem linken Vorderrad zugeordneten Lenkerlager 14, 14' wirkenden Kräfte größer sind als die auf die dem rechten Vorderrad zugeordneten Lenkerlager 15, 15' einwirkenden Kräfte, wird auch mehr Hydraulikflüssigkeit 13 aus den linken Lenkerlagern 14, 14' in den Ausdehnungsraum 12 der linken Spurstange 10 gedrückt als auf der rechten Seite des Fahrzeugs. Somit erfährt die linke Spurstange 10 eine größere Verlängerung als die rechte Spurstange 11, so daß das linke Vorderrad stärker in die Vorspur gelenkt wird als das rechte Vorderrad.

Durch diese größere Einlenkung des linken Vorderrades gegenüber der Einlenkung des rechten Vorderrades wird eine Kraft auf das Fahrzeug ausgeübt, die versucht, das Fahrzeug nach rechts zu drehen. Diese Kraft ist der die Gierbewegung erzeugenden Kraft entgegengerichtet und wird so gewählt, daß sie die Gierbewegung gerade aufhebt.

Somit wird die Geradeausstabilität des Fahrzeugs wesentlich verbessert und ein Ausbrechen des Fahrzeugs auf einer Fahrbahn mit unterschiedlichem Reibungskoeffizienten verhindert.

Mit der beschriebenen lenkbaren Vorderachse lassen sich aber auch beim Bremsen auf einem Untergrund mit weitgehend gleichmäßigen Reibungseigenschaften Gierbeschleunigungen ausgleichen, die bei ungleichmäßigem Abbremsen der rechten und linken Fahrzeugseite auftreten können. Ein Grund für eine derartige ungleichmäßige Bremsung können beispielsweise unterschiedlich abgenutzte Bremsen, unterschiedlich abgenutzte Fahrzeugräder oder eine ungleichmäßige Beladung des Fahrzeugs sein. Auch hierbei treten an den Lenkerlagern 14, 14' der linken Fahrzeugseite andere Kräfte auf als an den Lenkerlagern 15, 15' der rechten Fahrzeugseite, so daß auch hierbei ein einer Gierbeschleunigung entgegenwirkendes Einlenken eines der Vorderräder erzielt wird.

Sobald nun die Bremsung des Fahrzeugs beendet wird, verschwinden auch die auf die einzelnen Lenkerlager 14, 14', 15, 15' einwirkenden Kräfte, so daß der Ausdehnungsbereich 20 wieder sein normales Volumen einnimmt. Dabei wird die Hydraulikflüssigkeit aus den zugeordneten Ausdehnungsräumen 12 der Spurstangen 10, 11 in die entsprechenden Verdrängungsbereich 20 zurückgesaugt. Dieser Vorgang wird durch die Schraubendruckfeder 38 unterstützt, die den hydraulischen Kolben 31 in Richtung auf den Boden 39 des Zylinders 30 beaufschlagt. Sobald nun der Kolben 31 seine Endstellung erreicht, in der er die gesamte Hydraulikflüssigkeit 13 aus dem Ausdehungsraum 12 verdrängt hat, wird er von der Schraubendruckfeder 38 in seiner Endstellung gehalten, so daß die Vorderräder wieder in die für einen normalen Fahrbetrieb vorgesehene Vorspur eingelenkt sind.

**Patentansprüche**

1. Lenkbare Vorderachse für Kraftfahrzeuge
   mit je einem Achsschenkel (41) für jedes der beiden Vorderräder, der drehbar an zumindest einem über ein Lenkerlager (14, 15) am Chassis schwenkbar abgestützten Achslenker (18) gelagert ist,
   wobei die Drehachsen der Lenkerlager (14, 15) im wesentlichen in Längsrichtung des Kraftfahrzeugs angeordnet sind und mit je einer jedem der Vorderräder zugeordneten Spurstange (10, 11) die an einem mit dem jeweiligen Achsschenkel verbundenen Spurstangenhebel (36, 37) angelenkt ist,
   wobei zwischen den beiden Spurstangen (10, 11) eine mit diesen verbundene Lenkvorrichtung angeordnet ist,
   dadurch gekennzeichnet,
   daß die Spurstangen (10, 11) zur hydraulischen Längenverstellung einen Ausdehnungsraum (12) aufweisen, dem eine Hydraulikflüssigkeit (13) zuführbar ist, und
   daß beide der je einem Vorderrad zugeordneten Lenkerlager (14, 15) zwischen den Anschlußstellen (16, 17) für den Achslenker (18) und das Chassis (19) einen in Fahrzeuglängsrichtung zusammendrückbaren hohlen Verdrängungsbereich (20) aufweisen, in dem die Hydraulikflüssigkeit (13) untergebracht ist, die im Falle der bei einer Bremsung auftretenden Zusammendrückung des Verdrängungsbereiches (20) über eine Hydraulikleitung (21 bzw.22) den Ausdehnungsraum (12) der Spurstange (10 bzw. 11) des zugeordneten Vorderrades beaufschlagt.

2. Vorderachse nach Anspruch 1,
   bei der jeder Achsschenkel (41) mit einem vorderen und einem hinteren Achslenkerarm (18') mittels je eines Lenkerlagers (14, 14'; 15, 15') schwenkbar am Chassis abgestützt ist,
   dadurch gekennzeichnet,
   daß jedes Lenkerlager (14, 14'; 15, 15') einen hohlen Verdrängungsbereich (20) aufweist.

3. Vorderachse nach Anspruch 1 oder 2,
   dadurch gekennzeichnet,
   daß die Verdrängungsbereiche (20) der linken bzw. rechten Lenkerlager (14, 14' bzw. 15, 15') mit dem Ausdehnungsraum (12) der linken bzw. rechten Spurstange (10 bzw. 11) ein geschlossenes hydraulisches System bilden.

4. Vorderachse nach einem der Ansprüche 1, 2 oder 3,
   dadurch gekennzeichnet,
   daß der Verdrängungsbereich (20) einen hydraulischen Kolben (23) und einen hydraulischen Zylinder (52) aufweist, die federnd voneinander weg vorgespannt sind.

5. Vorderachse nach Anspruch 4,
   dadurch gekennzeichnet,
   daß jeder Achslenker (18) bzw. jeder Achslenkerarm (18') auf einer elastischen Buchse (25) gelagert ist, die auf der Chassisbefestigungsseite einen in den Zylinder (52) einvulkanisierten Balg (26) aufweist, der die durch die Buchse (25) begrenzte Hydraulikflüssigkeit (13) umschließt, und daß der Zylinder (52) auf der vom Balg (26) abgewandten Seite mit einer am Chassis (19) befestigten Abschlußplatte (27) verbunden ist, die die Hydraulikflüssigkeit (13) auf der der Buches (25) gegenüberliegenden Seite begrenzt und eine Anschlußbohrung (28) für die zur zugeordneten Spurstange (10, 11) führende Hydraulikleitung (21, 21'; 22, 22') aufweist, wobei zweckmäßigerweise auf der gegenüberliegenden Seite das Lenkerlager (14, 14'; 15, 15') mit einem einvulkanisierten Haltebolzen (29) am Chassis (19) befestigt ist.

6. Vorderachse nach einem der vorhergehenden Ansprüche,
dadurch gekennzeichnet,
daß jede Spurstange (10, 11) einen hydraulischen Zylinder (30) aufweist, in dem ein den Ausdehnungsraum (12) begrenzender hydraulischer Kolben (31) angeordnet ist, der federnd gegen den hydraulischen Zylinder (30) vorgespannt ist.

7. Vorderachse nach Anspruch 6,
dadurch gekennzeichnet,
daß einstückig mit dem hydraulischen Zylinder (30) der Spurstange (10, 11) ein erster Spurstangenabschnitt (32) mit daran angebrachter Befestigungsvorrichtung (33) ausgebildet ist und daß eine aus dem hydraulischen Zylinder (30) herausragende Kolbenstange (34) des hydraulischen Kolbens (31) einen zweiten Spurstangenabschnitt bildet, an dessen vom Kolben (31) abgewandten Ende ein Verbindungszapfen (35) zur Anlenkung der Spurstange (10, 11) am Spurstangenhebel (36, 37) angeordnet ist.

8. Vorderachse nach Anspruch 6 oder 7,
dadurch gekennzeichnet,
daß der hydraulische Kolben (31) der Spurstange (10, 11) von einer Schraubendruckfeder (38) gegen den Boden (39) des hydraulischen Zylinders (30) vorgespannt ist, an dem der hydraulische Kolben (31) in seiner Endstellung anliegt.

9. Vorderachse nach Anspruch 8,
dadurch gekennzeichnet,
daß die mit ihrem einen Ende an der vom Ausdehnungsraum (12) abgewandten Seite des hydraulischen Kolbens (31) abgestützte Schraubendruckfeder (38) mit ihrem anderen Ende an einer in den hydraulischen Zylinder (30) eingesetzten Führungsbuchse (40) für die Kolbenstange (34) des hydraulischen Kolbens (31) abgestützt ist.

**Revendications**

1. Essieu avant directeur pour véhicules à moteur comprenant une fusée d'essieu (41) pour chacune des deux roues avant, qui est montée rotative sur au moins un guide d'essieu (18) maintenu pivotant sur le châssis par un palier de guide (14, 15), les axes de rotation des paliers de guide (14, 15) étant disposés essentiellement dans la direction longitudinale du véhicule à moteur et chaque palier comprenant une barre d'accouplement (10, 11) associée à chacune des roues avant et articulée sur un levier de commande de fusée (36, 37) relié à la fusée d'essieu correspondante, un mécanisme de direction relié aux deux barres d'accouplement (10, 11) étant disposé entre lesdites barres, caractérisé en ce qu'en vue d'un déplacement longitudinal hydraulique, les barres d'accouplement (10, 11) présentent un espace d'expansion (12) dans lequel peut être introduit un liquide hydraulique (13) et en ce que les deux paliers de guide (14, 15) associés chacun à une roue avant présentent, entre les points de raccordement (16, 17) pour le guide d'essieu (18) et le châssis (19), une zone de refoulement (20) creuse qui peut être comprimée dans la direction longitudinale du véhicule et dans laquelle est logé le liquide hydraulique (13) qui, lors de la compression de la zone de refoulement (20) apparaissant en cas de freinage, pénètre par une conduite hydraulique (21 ou 22) dans l'espace d'expansion (12) de la barre d'accouplement (10, 11) de la roue avant associée.

2. Essieu avant selon la revendication 1, dans lequel chaque fusée d'essieu (41) est maintenue pivotante sur le châssis par des bras avant et arrière (18') de guide d'essieu à l'aide d'un palier de guide (14, 14'; 15, 15') pour chaque bras, caractérisé en ce que chaque palier de guide (14, 14'; 15, 15') présente une zone de refoulement creuse (20).

3. Essieu avant selon la revendication 1 ou 2, caractérisé en ce que les zones de refoulement (20) du palier de guide droit ou gauche (14, 14' ou 15, 15') forment un système hydraulique fermé avec l'espace d'expansion (12) de la barre d'accouplement droite ou gauche (10 ou 11).

4. Essieu avant selon l'une des revendications 1, 2 ou 3, caractérisé en ce que la zone de refoulement (20) comporte un piston hydraulique (23) et un cylindre hydraulique (52) qui sont maintenus éloignés l'un de l'autre élastiquement.

5. Essieu avant selon la revendication 4, caractérisé en ce que chaque guide d'essieu (18) ou chaque bras (18') de guide d'essieu est monté sur un coussinet élastique (25) qui présente sur le côté de fixation au châssis un rebord formant soufflet (26) qui est fixé par vulcanisation dans le cylindre (52) et entoure le liquide hydraulique (13) limité par le coussinet (25) et en ce que le cylindre (52) est relié sur le côté éloigné du soufflet (26), à une plaque de fermeture (27) qui est fixée sur le châssis (19), limite le liquide hydraulique (13) sur le côté opposé au coussinet (25) et présente un trou de raccordement (28) pour la conduite hydraulique (21, 21'; 22, 22') menant à la barre d'accouplement associée (10, 11), le palier de guide (14, 14'; 15, 15') étant de manière appropriée fixé sur le châssis (19) sur le côté opposé par un goujon de maintien (29) fixé par vulcanisation.

6. Essieu avant selon l'une des revendications précédentes, caractérisé en ce que chaque barre d'accouplement (10, 11) présente un cylindre hydraulique (30) dans lequel est disposé un piston hydraulique (31) qui délimite l'espace d'expansion (12) et est sollicité élastiquement vers le cylindre hydraulique (30).

7. Essieu avant selon la revendication 6, caractérisé en ce qu'une première partie de barre d'accouplement (32) comportant un dispositif de fixation (33) est réalisée d'une seule pièce avec le cylindre hydraulique (30) de la barre d'accouplement (10, 11) et en ce qu'une tige de piston (34) du piston hydraulique (31) faisant saillie du cylindre hydraulique (30) forme une deuxième partie de barre d'accouplement, à l'extrémité éloignée du piston (31) de laquelle est disposé un tourillon d'assemblage (35) pour l'articulation de la barre d'accouplement (10, 11) sur le levier de commande de fusée (36, 37).

8. Essieu avant selon la revendication 6 ou 7, caractérisé en ce que le piston hydraulique (31) de la barre d'accouplement (10, 11) est sollicité par un ressort hélicoïdal de compression (38) vers le fond (39) du cylindre hydraulique (30) sur lequel prend appui le piston hydraulique (31) dans sa position extrême.

9. Essieu avant selon la revendication 8, caractérisé en ce que le ressort hélicoïdal de compression (38) prenant appui par l'une de ses extrémités sur le côté du piston hydraulique (31) éloigné de l'espace d'expansion (12), prend appui par son autre extrémité sur une douille de guidage (40) montée dans le cylindre hydraulique (30) pour la tige de piston (34) du piston hydraulique (31).

## Claims

1. Steerable front axle for motor vehicles with the two front wheels each having an axle arm (41) which is rotatably mounted on at least one axle guide (18) which is pivotably supported on the chassis via a guide bearing (14, 15),

in which the rotary axles of the guide bearing (14, 15) are arranged essentially in the longitudinal direction of the motor vehicle, and each of the front wheels has a track rod (10, 11) which is linked to a track rod lever (36, 37) which is connected to the respective axle arm,

whereby a steering device is arranged between the two track rods (10, 11) and connected with the same,

characterised

in that for the hydraulic longitudinal displacement the track rods (10, 11) have an expansion chamber (12), into which a hydraulic fluid (13) can be supplied, and that both of the guide bearings (14, 15) provided for each front wheel have arranged between the connecting points (16, 17) for the axle guide (18) and the chassis (19) a hollow displacement region (20), compressible in the longitudinal direction of the vehicle, in which is contained the hydraulic fluid (13) which, when the displacement region (20) is compressed because of braking, via a hydraulic pipe (21 or 22) acts on the expansion chamber (12) of the track rod (10 or 11) of the associated front wheel.

2. Front axle according to claim 1, in which each axle arm (41) with a front and rear axle arm (18) is pivotably supported on the chassis by means of a guide bearing (14, 14'; 15, 15'), characterised

3. Front axle according to claim 1 or 2, characterised

in that the displacement regions (20) of the left or right-hand guide bearing (14, 14' or 15, 15') form a sealed hydraulic system with the expansion chamber (12) of the left or righthand track rod (10 or 11).

4. Front axle according to one of the claims 1, 2 or 3, characterised

in that the displacement region (20) comprises a hydraulic piston (23) and a hydraulic cylinder (52) which are biased to resiliently move away from each other.

5. Front axle according to claim 4, characterised

in that each axle guide (18) or each axle guide arm (18') is mounted on an elastic bush (25) which has a cushion (26) vulcanised into the cylinder (52) on the chassis securing side, which cushion surrounds the hydraulic fluid (13) delimited by the bush (25), and the cylinder (52) is connected to an end plate (27) secured to the chassis (19) on the side facing away from the cushion (26), the end plate (27) delimiting the hydraulic fluid (13) on the side opposite to the bush (25) and has a connecting bore (28) for the hydraulic pipe (21, 21'; 22, 22') leading to the associated track rod (10, 11), whereby advantageously on the opposite end the guide bearing (14, 14'; 15, 15') is secured to the chassis (19) by means of a vulcanised-on retaining bolt (29).

6. Front axle according to one of the aforementioned claims, characterised

in that each track rod (10, 11) has a hydraulic cylinder (30) in which is arranged an expansion chamber (12) delimited by a hydraulic piston (31) which is biased to resiliently move against the hydraulic cylinder (30).

7. Front axle according to claim 6, characterised

in that the hydraulic cylinder (30) of the track rod (10, 11) is formed in one piece with a first track rod section (32) with a securing device (33) fixed thereto, and that a piston rod (34) of the hydraulic piston (31) protruding from the hydraulic cylinder (30) forms a second track rod section whose end facing away from the piston (31) has a connecting pin (35) for linking the track rod (10, 11) to the track rod lever (36, 37).

8. Front axle according to claim 6 or 7, characterised

in that the hydraulic piston (31) of the track rod (10, 11) is biased by means of a helical pressure spring (38) against the base (39) of the hydraulic cylinder (30), against which the hydraulic piston (31) rests in its terminal position.

9. Front axle according to claim 8, characterised

in that the helical pressure spring (38) supported at one end on the end of the hydraulic piston (31) facing away from the expansion chamber (12) is supported at its other end on a guide bush (40), inserted in the hydraulic cylinder (30), for the piston rod (34) of the hydraulic piston (31).

Fig.1

# Fig. 2

14,14', 15,15'

19

26  51

16

28

25

47

42

48

47

17

29

27

18'

23  52  13  53

18

20

# Fig. 3

10,11

35

30

39  56

34

38  31  12  55

54  40

32  33